# EUROPÄISCHE PATENTSCHRIFT

(11) **EP 1 318 491 B1**
(45) Veröffentlichungstag und Bekanntmachung des Hinweises auf die Patenterteilung: **15.09.2004**
(21) Anmeldenummer: 02025964.4
(22) Anmeldetag: 21.11.2002
(51) Int. Cl.: G08G 1/16

(54) **ACC-Fahrspurprädiktionsbreitenadaption abhängig von Navigationssystemdaten und Objektdaten**
ACC with adaptable lane width prediction depending on navigational data and object data
ACC dans lequel la largeur de voie estimée est adaptée en fonction des données de navigation et d'objet

(30) Priorität: 07.12.2001 DE 10160189
(43) Veröffentlichungstag der Anmeldung: 11.06.2003
(73) Patentinhaber: Bayerische Motoren Werke Aktiengesellschaft, 80809 München (DE)
(72) Erfinder: Prestl, Willibald, Dr., 82223 Eichenau (DE); Proemm, Uwe, 80686 München (DE)

(56) Entgegenhaltungen:
- EP-A- 0 934 846
- DE-A- 10 004 525

## Beschreibung

Die Erfindung betrifft eine Vorrichtung und ein Verfahren zur Erfassung von vor einem Fahrzeug befindlichen Hindernissen im Rahmen eines Fahrgeschwindigkeitsregelsystems wie ACC (Automatic Cruise Control) oder eines Systems zur Abstands- oder Kollisionswarnung in Fahrzeugen.

Heutige ACC Systeme oder Systeme zur Abstands- oder Kollisionswarnung auf bewegte vorausfahrende Straßenverkehrsteilnehmer bestehen mindestens aus einem Sensierungssystem für vorausfahrende Objekte, z.B. Radar oder Lidar, und einer Funktion "Spurprädiktion", die versucht die eigene Fahrspur der näheren Zukunft in Form eines Fahrkorridors vorauszuberechnen. Dieser kann eine feste oder über dem Abstand variable Breite aufweisen, die jedoch in der Regel fest definiert ist.

Ein solches Hinderniserfassungssystem ist beispielsweise aus der DE-A-44 23 966 bekannt. Es nutzt Sensoren wie z. B. Abtastlaserradare, um Hindernisse auf der vorausgehenden Bewegungsbahn zu erfassen und zu überprüfen. Die so ermittelte relative Geschwindigkeit des Hindernisses in Bezug auf das geregelte Fahrzeug (dynamische Relativität) sowie die Position der Fahrzeuge zueinander dient der Ermittlung der Relevanz für das Hindernis. Abhängig von der Einstufung des Hindernisses kann die Antriebssteuerung geeignet durchgeführt werden. Die Bestimmung der Relevanz erfolgt weiterhin entsprechend den möglichen vorausgehenden Bewegungsbahnzonen des Fahrzeugs. Die Bestimmung für Hindernisse außerhalb der vorangehenden Bahn, auf der sich das Fahrzeug bewegt, wird ausgeschlossen.

Das Vorausberechnen der eigenen Fahrspur oder Bewegungsbahn der näheren Zukunft in Form eines Fahrkorridors wird auch als Spurprädiktion bezeichnet. Hierbei werden, wie in EP-A-0 849 109 beschrieben, verschiedene Radgeschwindigkeiten sowie die Gierrate des Fahrzeugs bestimmt und daraus der künftige Fahrkorridor berechnet.

Die EP-A-11 08 603 beaufschlagt die Radgeschwindigkeiten eines Fahrzeuges zur Berechnung des Fahrkorridors mit einem veränderlichen Reifenkorrekturfaktor.
In DE-C-196 37 245 wird beschrieben, daß bei einem beabsichtigten oder beginnenden Spurwechsel des geregelten Fahrzeugs eine einseitige Erweiterung des berücksichtigten Fahrkorridors um den benachbarten Fahrstreifen in Richtung des Spurwechsels erfolgt.
EP-A-0 934 846 beschreibt ein Verfahren, bei dem die definierte Fahrspurbreite in Abhängigkeit von den Quergeschindigkeiten der erfaßten Objekte in derselben oder in benachbarten Fahrspuren verringert oder vergrößert wird.
DE-A-100 04 525 beschreibt ein Verfahren, bei dem eine Abstandsregelung in Abhängigkeit von der befahrenen Straße erfolgt. Hierbei wird der Fahrschlauch für ein Befahren einer mehrspurigen Straße mit einer geringeren Breite versehen, als es für eine einspurige Straße der Fall ist.
DE-A-196 38 511 beschreibt ein Längsführungssystem bei dem der Straßenverlauf vor dem eigenen Fahrzeug mit Hilfe eines Navigationssystems erfaßt wird.

Da ein Objekt für eine Regelung oder Warnung als relevant angesehen wird, wenn es innerhalb der prädizierten Fahrspur erkannt wird, bestimmt die Breite der Fahrspur im jeweiligen Abstand eines sensorisch gemessenen Objektes maßgeblich das funktionale Verhalten eines ACC- oder Warnsystems gegenüber dem Benutzer, da sie bestimmt, wie früh ein seitlich hereinkommendes Objekt als relevant erkannt wird oder wie lange ein seitlich herauswanderndes für relevant gehalten wird. Dabei werden u. a. auch die Häufigkeit von fälschlichen Reaktionen auf Objekte in benachbarten Fahrspuren genauso wie der subjektive Eindruck bzgl. der Detektionsstabilität stark beeinflußt.

Der feste Breitenverlauf der prädizierten Fahrspur stellt einen Kompromiß über alle in der Nutzung als relevant erkannten Situationen, Straßentypen und Charakteristiken dar. So ist die Fahrspurprädiktion insbesondere auf mehrspurigen Straßen so schmal anzulegen, daß eine verläßliche Separation von der Nachbarspur erreicht wird. Dies führt z. B. auf kurvigen Landstraßen, deren Kurvenverlauf vorab nicht bekannt ist, zu einem frühzeitigen Herauswandern von Objekten aus der Spurprädiktion, so daß diese vom Sensierungssystem verloren werden.

Der vorliegenden Erfindung liegt die Aufgabe zugrunde, ein Verfahren und eine Vorrichtung bereitzustellen, mit dem bzw. mit der das Fahrzeugverhalten im Rahmen eines Fahrgeschwindigkeitsregelsystems wie ACC (Automatic Cruise Control) oder eines Systems zur Abstands- oder Kollisionswarnung objektiv und subjektiv verbessert wird.

Diese Aufgabe wird mit den Merkmalen der Patentansprüche gelöst. Die Erfindung geht von dem Grundgedanken aus, daß die prädizierte Fahrspurbreite in Abhängigkeit von Straßenklassifizierungsinformationen adaptiert werden kann. So kann die Fahrspurprädiktion auf einspurigen Straßen auf einen Einspurmodus geschaltet werden. Im Einspurmodus kann die prädizierte Fahrspurbreite für den Zweck der Relevanzbewertung fahrender (in der eigenen Richtung mitbewegter) Ziele deutlich aufgeweitet werden kann, da die Gefahr der Fehlinterpretation von Nachbarspurzielen ausgeschlossen ist, da keine Nachbarspuren existieren. Generell und insbesondere auf kurvigen Streckenabschnitten kann dabei ohne genaue Kenntnis des weiteren Streckenverlaufs, z. B. solange noch keine ausreichend präzisen Navigationsdaten vorliegen, eine deutliche Verbesserung der Objektstabilität erreicht und ein frühes Verlieren von Zielen in Kurven vermieden werden.

Hierzu wird auf Basis mindestens eines Indikators auf die Anzahl der Fahrspuren geschlossen. Als Indikator können hierbei Straßenklassifizierungsinformationen zur jeweils befahrenen Straße dienen, die einem Navigationssystem und/oder sonst einer Datenbank entnommen werden. Aus diesen läßt sich die Anzahl der Spuren direkt ablesen oder indirekt ableiten, z.B. aus der Angabe des Straßentyps. Alternativ oder zusätzlich können weitere Indikatoren zum Rückschluß auf Einspurigkeit herangezogen werden, wie Umgebungsinformationen oder Objektdaten, z.B. die gesetzlich zulässige Höchstgeschwindigkeit, Ortschaftsangaben (außerhalb, innerhalb geschlossener Ortschaft) oder Fahrbahninformationen. Wird aufgrund dieser Indikatoren auf die Einspurigkeit der befahrenen Straße geschlossen, so kann die Fahrspurprädiktion auf einen Einspurmodus geschaltet werden, bei dem die prädizierte Fahrspurbreite deutlich aufgeweitet wird.

Ist ein vorausfahrendes Fahrzeug jedoch im Begriff abzubiegen, so bewirkt die Spurverbreiterung ein übertrieben langes Detektieren des eigentlich aus der eigenen Spur herausfahrenden Fahrzeugs. Um dem entgegenzuwirken, kann die Breitenvergrößerung der Fahrspur im Einspurmodus einseitig oder beidseitig auf das ursprüngliche Maß oder sogar darunter zurückgenommen werden. Dies erfolgt z. B. dann, wenn ein Fahrzeug, dessen Position relativ zum eigenen Fahrzeug bekannt ist, das wiederum über ein Navigationssystem seine Absolutposition relativ zu einem Streckenverlauf kennt, im Bereich einer Abzweigung oder einer Abbiegespur bzw. Kreuzung jeweils nach links oder rechts erkannt wird. Durch die Zurücknahme der Breitenvergrößerung befindet sich das Fahrzeug auf der Abbiegespur nicht mehr innerhalb der prädizierten Spurweite. Eine Bestimmung dieses Fahrzeuges als Hindernis wird verhindert und ein schnelleres Loslassen des nicht relevanten Hindernisses wird bewirkt.
Damit jedoch bei Freifahrt, das heißt, in der eigenen Fahrspur wurde kein Objekt erfaßt, frühzeitig ein seitlich hereinkommendes Objekt erkannt wird, kann die oben beschriebene Breitenverschmälerung unter der Bedingung aktiviert werden, daß aktuell ein vorausfahrendes Objekt erkannt wurde. Dadurch wird gewährleistet, daß ein auf die eigene Fahrspur einfahrendes und damit relevantes Fahrzeug frühzeitig als solches erkannt und dementsprechend berücksichtigt wird.

Die Breitenverschmälerung kann in Abhängigkeit von einer aktuellen und/oder prädizierten vorausliegenden Kurvigkeit der Straße deaktiviert werden. Vorzugsweise kann die Spurverbreiterung einseitig in Richtung des Kurvenverlaufs eingeschaltet werden. Somit wird auf besonders kurvigen Streckenabschnitten erreicht, dass sich ein vorausfahrendes Fahrzeug, auch in einer Kurve, innerhalb der prädizierten (erweiterten) Fahrspurbreite befindet. Ein Verlust des Ziels wird damit verhindert.

Durch die erfindungsgemäße Spurbreitenadaption wird die vom Fahrer subjektiv erlebte Detektionssicherheit auf einspurigen Straßen erhöht und der Wirkungsbereich von Warnalgorithmen erweitert. In beiden Fällen müssen keine Nachteile, wie sie sich z. B. bei einer pauschalen Landstraßenspurverbreiterung ergeben würden, in Kauf genommen werden.

In einer bevorzugten Ausführungsform der vorliegenden Erfindung wird zwischen verschiedenen Modi der prädizierten Fahrspurbreite gewechselt. Hierbei beschreibt ein Modus 1 die prädizierte Standard Fahrspurbreite, ein Modus 3 eine Aufweitung und ein Modus 2 eine Verringerung der prädizierten Fahrspurweite gegenüber der jeweiligen Ausgangssituation. Modi 2 und 3 können sowohl beidseitig (2a, 3a) oder aber auch einseitig links (2b, 3b) oder nur rechts (2c, 3c) aktiviert werden.

In einer bevorzugten Ausführungsform wird die Anzahl der Fahrspuren der befahrenen Straße aus Navigationssystemdaten und/oder Datenbankinformationen herausgelesen. Ebenso können weitere Informationen, wie z. B. der Straßentyp, als Indikatoren für die Anzahl der Fahrspuren dienen, und so auf Basis der Indikatoren auf die Anzahl der Fahrspuren geschlossen werden. Die benötigten Informationen und Daten können während der Fahrt online an das Fahrzeug übermittelt werden und/oder sich auf einem Datenträger im Fahrzeug befinden. Weitere Informationen, die als Indikator für eine Anzahl der Fahrspuren dienen, können über geeignete Vorrichtungen aufgenommen und ausgewertet werden. So können Umgebungsinformationen und/oder Objektdaten, wie z. B. zulässige Höchstgeschwindigkeiten, Ortschaftsangaben oder Fahrbahndaten wie Fahrbahnbreite oder Fahrbahnmarkierung, über geeignete Vorrichtungen oder Sensoren aufgenommen, verwertet und als Indikatoren für die Anzahl der Fahrspuren verwendet werden.

Die Erfindung kann im Rahmen eines Fahrgeschwindigkeitsregelsystems wie beispielsweise eines ACC-Systems (Automatic Cruise Control System) oder Systems zur Abstands- oder Kollisionswarnung in Fahrzeugen zum Einsatz kommen. Sie erweitert den Wirkungsbereich von Warnalgorithmen und erhöht die vom Fahrer subjektiv erlebte Detektionsstabilität.

## Patentansprüche

1. Verfahren zur Erfassung von in einer prädizierten Fahrspur vor einem Fahrzeug befindlichen Hindernissen, bei dem die Breite der prädizierten Fahrspur in Abhängigkeit von Informationen eines Navigationssystems über die Straßenklassifizierung, über die Anzahl der Fahrspuren und/oder über die Kurvigkeit verändert wird, wobei bei Erkennung von einspurigen Straßen auf einen Einspurmodus geschaltet wird, bei dem die Breite der prädizierten Fahrspur gegenüber derjenigen einer mehrspurigen Straße aufgeweitet wird, **dadurch gekennzeichnet, dass** Bereiche von Kreuzungen, Abzweigungen oder Abbiegespuren erkannt werden und dass in diesen Bereichen die aufgeweitete Breite der prädizierten Fahrspur einseitig und/oder beidseitig zurückgenommen wird.

2. Verfahren nach Anspruch 1, **dadurch gekennzeichnet, dass** auf Basis mindestens eines Indikators auf die Anzahl der Fahrspuren geschlossen wird und dass Umgebungsinformationen und/oder Objektdaten, wie z. B. zulässige Höchstgeschwindigkeiten, Ortschaftsangaben oder Fahrbahndaten Indikatoren für die Anzahl der Fahrspuren sind.

3. Verwendung eines Verfahrens nach Anspruch 1 oder 2 im Rahmen eines Fahrgeschwindigkeitsregelsystems wie ACC oder eines Systems zur Abstands- oder Kollisionswarnung in Fahrzeugen.

4. Vorrichtung zur Erfassung von in einer prädizierten Fahrspur vor einem Fahrzeug befindlichen Hindernissen mit einem System zur Veränderung der Breite der prädizierten Fahrspur in Abhängigkeit von Informationen eines Navigationssystems über die Straßenklassifizierung, über die Anzahl der Fahrspuren und/oder über die Kurvigkeit, wobei das System derart ausgestaltet ist, dass bei Erkennung von einspurigen Straßen auf einen Einspurmodus geschaltet wird, bei dem die Breite der prädizierten Fahrspur gegenüber derjenigen einer mehrspurigen Straße aufgeweitet wird, **dadurch gekennzeichnet, dass** das System auch derart ausgestaltet ist, dass Bereiche von Kreuzungen, Abzweigungen oder Abbiegespuren erkannt werden und dass in diesen Bereichen die aufgeweitete Breite der prädizierten Fahrspur einseitig und/oder beidseitig zurückgenommen werden.

5. Vorrichtung nach Anspruch 4, **dadurch gekennzeichnet, dass** das System derart ausgestaltet ist, dass auf Basis mindestens eines Indikators auf die Anzahl der Fahrspuren geschlossen wird und dass Umgebungsinformationen und/oder Objektdaten, wie z. B. zulässige Höchstgeschwindigkeiten, Ortschaftsangaben oder Fahrbahndaten Indikatoren für die Anzahl der Fahrspuren sind.

6. Verwendung einer Vorrichtung nach Anspruch 4 oder 5 im Rahmen eines Fahrgeschwindigkeitsregelsystems wie ACC oder eines Systems zur Abstands- oder Kollisionswarnung in Fahrzeugen.

## Claims

1. A method for detecting obstacles located in a predicted lane in front of a vehicle, in which the width of the predicted lane is changed as a function of information from a navigation system about the road classification, the number of lanes and/or the amount of curvature, wherein on detection of single-lane roads, a switch is made to single-lane mode, in which the width of the predicted lane is expanded relative to that of a multi-lane road, **characterised in that** regions with junctions, branches or exit lanes are detected and **in that** in these regions the expanded width of the predicted lane is reversed on one side and/or either side.

2. A method according to claim 1, **characterised in that** conclusions about the number of lanes are drawn on the basis of at least one indicator and **in that** environment information and/or object data, such as, for example permitted top speeds, local information or roadway data are indicators for the number of lanes.

3. Use of a method according to claim 1 or 2, in the scope of a speed control system such as ACC or a system for distance or collision warning in vehicles.

4. A device for detecting obstacles located in a predicted lane in front of a vehicle, with a system for changing the width of the predicted lane as a function of information from a navigation system about the road classification, the number of lanes and/or the amount of curvature, wherein the system is designed in such a way that on detection of single-lane roads, a switch is made to single-lane mode, in which the width of the predicted lane is expanded relative to that of a multi-lane road, **characterised in that** the system is also designed such that regions with junctions, branches or exit lanes are detected and **in that** in these regions the expanded width of the predicted lane is reversed on one side and/or either side.

5. A device according to claim 4, **characterised in that** the system is designed in such a way that conclusions about the number of lanes are drawn on the basis of at least one indicator and **in that** environment information and/or object data, such as, for example permitted top speeds, local information or roadway data are indicators for the number of lanes.

6. Use of a device according to claim 4 or 5, in the scope of a speed control system such as ACC or a system for distance or collision warning in vehicles.

## Revendications

1. Procédé d'acquisition d'obstacles se trouvant devant un véhicule automobile dans une voie prédite, selon lequel la largeur de la voie prédite est modifiée en fonction d'informations d'un système de navigation sur le classement de la route, sur le nombre de voies et/ou sur la sinuosité, en commutant sur un mode monovoie à la reconnaissance de routes à une voie, la largeur de la voie prédite étant élargie par rapport à celle d'une route à plusieurs voies,
**caractérisé en ce que**
des zones de carrefours, d'embranchements ou de voies de sortie sont reconnues et dans ces zones, la largeur élargie de la voie prédite est ramenée d'un côté et/ou des deux côtés.

2. Procédé selon la revendication 1,
**caractérisé en ce que**
sur la base d'au moins un indicateur, une conclusion est tirée sur le nombre de voies, et des informations sur l'environnement et/ou des données d'objet, telles, par exemple, les vitesses maximales autorisées, des indications sur la localité ou des données sur la chaussée, sont des indicateurs sur le nombre de voies.

3. Utilisation d'un procédé selon la revendication 1 ou 2,
dans le cadre d'un système de régulation de vitesse de circulation, tel un AAC ou un système d'avertissement d'espacement ou de collision dans des véhicules automobiles.

4. Dispositif d'acquisition d'obstacles se trouvant devant un véhicule automobile dans une voie prédite, comportant un système de modification de la largeur de la voie prédite en fonction d'informations d'un système de navigation sur le classement de la route, sur le nombre de voies et/ou sur la sinuosité, le système étant constitué pour commuter en mode monovoie lors de la reconnaissance de routes à une voie, la largeur de la voie prédite étant élargie par rapport à celle d'une route à plusieurs voies,
**caractérisé en ce que**
le système est également constitué pour reconnaître des zones de carrefours, d'embranchements ou de voies de sortie, et dans ces zones, la largeur élargie de la voie prédite est ramenée d'un côté et/ou des deux côtés.

5. Dispositif selon la revendication 4
**caractérisé en ce que**
le système est constitué de manière telle qu'une conclusion est tirée sur le nombre de voies en se basant sur au moins un indicateur et que des informations sur l'environnement et/ou des données d'objet, telles, par exemple, les vitesses maximales autorisées, des indications sur la localité ou des données sur la chaussée de circulation sont des indicateurs sur le nombre de voies.

6. Utilisation d'un dispositif selon la revendication 4 ou 5,
dans le cadre d'un système de régulation de vitesse de circulation, tel un AAC ou un système d'avertissement d'espacement ou de collision dans des véhicules automobiles.
